# EUROPEAN PATENT SPECIFICATION

(11) **EP 2 364 887 B1**
(45) Date of publication and mention of the grant of the patent: **10.04.2019**
(21) Application number: 11382037.7
(22) Date of filing: 11.02.2011
(51) Int. Cl.: B60R 21/38

(54) **Safety system applicable to automobiles for the protection of a pedestrian in the event of being hit**
Sicherheitssystem, das auf Automobile zum Schutz eines Fußgängers im Fall des Zusammenstoßes mit diesem anwendbar ist
Système de sécurité s'appliquant à des automobiles pour la protection d'un piéton en cas de choc

(30) Priority: 08.03.2010 ES 201030337; 23.04.2010 ES 201030595
(43) Date of publication of application: 14.09.2011
(73) Proprietor: Flexngate Automotive Iberica, S.A., 08520 Les Franqueses Del Valles (ES)
(72) Inventor: Agell Merino, Aitor, E-08221, TERRASSA (ES)
(74) Representative: Sugrañes Patentes y Marcas

(56) References cited:
- EP-A1- 2 036 786
- DE-A1-102005 007 903

## Description

### Technical field of the invention

The invention relates to a safety system applicable to automobiles for the protection of a pedestrian in the event of being hit, the system being of the type comprising means for, in the event of someone being hit, displacing in a guided manner the rear part of the hood from its initial closed position and in a direction with an upward component until reaching an impact position, for the purpose of damping the impact of the pedestrian against the components located under the hood.

### Background of the Invention

Different proposals for displacing the rear part of the hood of an automotive vehicle in the event of someone being hit are known today. Such proposals are based on providing the vehicle with means for displacing the articulated attachment of the chassis with the hood in the event of someone being hit. In practice, these proposals are implemented by means of devices actively displacing the hinge of a hood when a detector placed in the front of the vehicle warns that someone has been hit and immediately triggers a trigger signal for a pyrotechnic actuator which, when triggered, pushes a piston connected with a movable part of the device, which in turn transmits its movement to the articulated attachment with the hood when displaced.

The displacement of the articulated attachment, and accordingly of the rear part of the hood, has an upward component for raising the hood from its initial closed position and thus separating it from the components of the vehicle housed under the hood, such as components of the motor, such that the hood can absorb part of the impact occurring when the pedestrian impacts the vehicle as a consequence of being hit.

The known devices are designed so that the displacement of the articulated attachment with the hood is guided, for displacing the rear part of the hood from its initial closed position to an impact position previously selected according to the features of each vehicle, but they are not prepared to displace the hood, after the pyrotechnic actuator is triggered, in the reverse direction, i.e., towards the closed position the hood originally occupied.

Document DE 102005007903 describes a safety system wherein the mechanical device that supports the hinge of the hood can be reset, in order to the safety system to be operative again, by means of a pawl that is charged to an original position by repeatedly opening and closing the hood.

The document EP 2036786 A also describes a similar safety system. When someone is hit, the hood is raised with respect to its initial closed position, i.e., the position which the hood occupies when the vehicle travels in normal conditions. This raised position is not suitable for the vehicle to start moving again because it significantly reduces the driver's field of vision once the movable parts of the devices connecting the chassis with the hood, intended for causing its displacement in the event of collision, can be freely displaced, causing vibrations in the hood along with abrupt movements, impacts and shaking which impede safely driving the vehicle.

### Disclosure of the Invention

The safety system object of the invention is defined in claim 1 and solves the aforementioned drawbacks. The system is applicable to automobiles for the protection of a pedestrian in the event of being hit, and is of the type comprising means for displacing in a guided manner the rear part of the hood in the event of someone being hit from its initial closed position, and in a direction with an upward component, until reaching an impact position for the purpose of damping the impact of the pedestrian against the components located under the hood.

Essentially, the system according to the invention is characterized in that the means for displacing said rear part of the hood are suitable so that, once the impact position is reached, the rear part of the hood can be displaced from said impact position and in a direction with a downward component until adopting a provisional retaining position, at a level above its initial closed position, and in that the system further comprises mechanical means for the automatic and firm securing of the hood to the chassis of the automobile when the hood reaches said provisional retaining position.

Advantageously, after hitting someone or in any case after the hood has been displaced to a predetermined impact position, the hood can be manually displaced to the provisional retaining position in which it will be firmly secured to the chassis of the vehicle. Since the hood is located in a position at a level under the impact position, and it is firmly secured to the chassis, the vehicle can move again without the driver's field of vision being dangerously reduced.

According to another feature of the invention, the provisional retaining position is such that the user can visually see that the hood does not adopt its initial closed position. It thus prevents a driver from being able to move with the vehicle thinking that the safety system is armed.

According to a particularly interesting variant of the invention, the means for displacing in a guided manner the rear part of the hood and the mechanical means for the automatic and firm securing of the hood form a self-supporting assembly. The installation in the vehicle is thus optimized and the correct calibration of the mechanical means for the automatic and firm securing of the hood is assured.

In one embodiment, the means for displacing in a guided manner the rear part of the hood comprise a fixed part, intended for being firmly secured to the chassis of the vehicle; a movable part which supports or in which an articulated attachment with the rear part of the hood is integrated; at least one guiding lever which connects and guides the displacement of the movable part with respect to the fixed part; and a pyrotechnic actuator susceptible of applying a pushing action, when it is actuated, which is transmitted to the movable part for displacing the articulated attachment with the hood and by driving the rear part of the hood from its initial closed position to the impact position, the mechanical means for the automatic and firm securing of the hood comprising a rotating bar which rotates about a shaft integral with the fixed part and biased by elastic means in a retaining direction, the bar being provided with a hook and the second movable part with a protuberance intended for sliding on the outer face of the hook and for displacing it by compressing the corresponding elastic means when the rear part of the hood is displaced from its impact position towards the provisional retaining position, and for being seized by the hook once said protuberance exceeds the distal end or tip of the retaining arm of the hook and the latter is actuated by said elastic means towards the protuberance, the displacement of the second movable part, and hence of the rear part of the hood, being impeded.

According to another feature of this embodiment, the lever or the movable part of the means for displacing in a guided manner the rear part of the hood comprises a projection impeding the displacement of the rotating bar in the retaining direction while the pyrotechnic actuator is not actuated.

In another embodiment, the means for displacing in a guided manner the rear part of the hood comprise a fixed part, intended for being firmly secured to the chassis of the vehicle; a movable part which supports or in which an articulated attachment with the rear part of the hood is integrated; at least one guiding lever which connects and guides the displacement of the movable part with respect to the fixed part; a pushing lever, rotational in relation to the fixed part; and a pyrotechnic actuator connected with said pushing lever, susceptible of applying on the latter a pushing action, when it is actuated, which is transmitted to the movable part for displacing the articulated attachment with the hood and by driving the rear part of the hood from its initial closed position to the impact position, the mechanical means for the automatic and firm securing of the hood comprising a recess provided on an edge of the guiding lever; a spring biasing the pushing lever in the direction opposite to the pushing direction; and a projection provided in the pushing lever, all so that once the hood reaches the impact position and when it is displaced towards the provisional retaining position, it forces the guiding lever to adopt a position in which the projection of the pushing lever fits by snapping, like a catch, in the recess of the guiding lever, blocking its movement and, accordingly, firmly securing the hood.

### Brief Description of the Drawings

The attached drawings illustrate, by way of non-limiting example, two embodiment variants of the system according to the invention, in which the means for displacing in a guided manner the rear part of the hood and the mechanical means for the automatic and firm securing of the hood form a self-supporting assembly. Specifically:
Figures 1 to 4 depict a working sequence of a first variant of the system; and
Figures 5 to 8 depict a working sequence according to a second variant of the system.

### Detailed Description of the Drawings

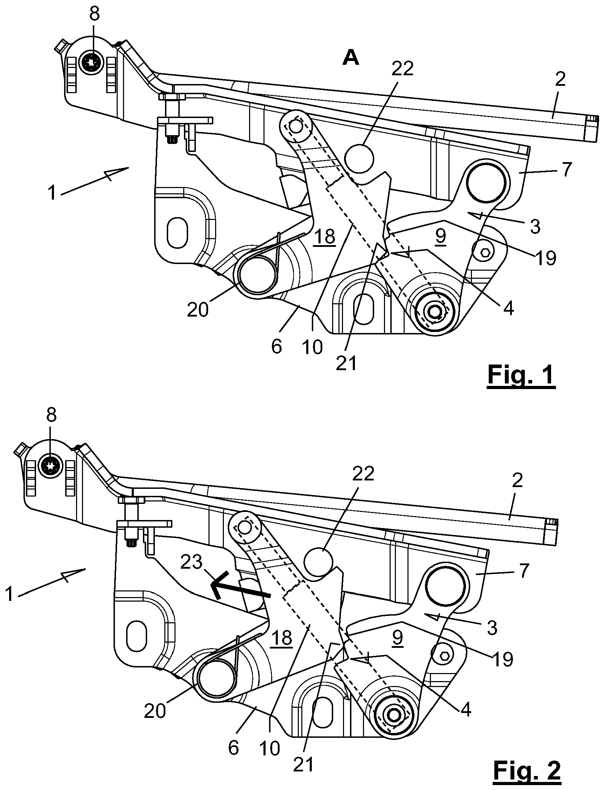

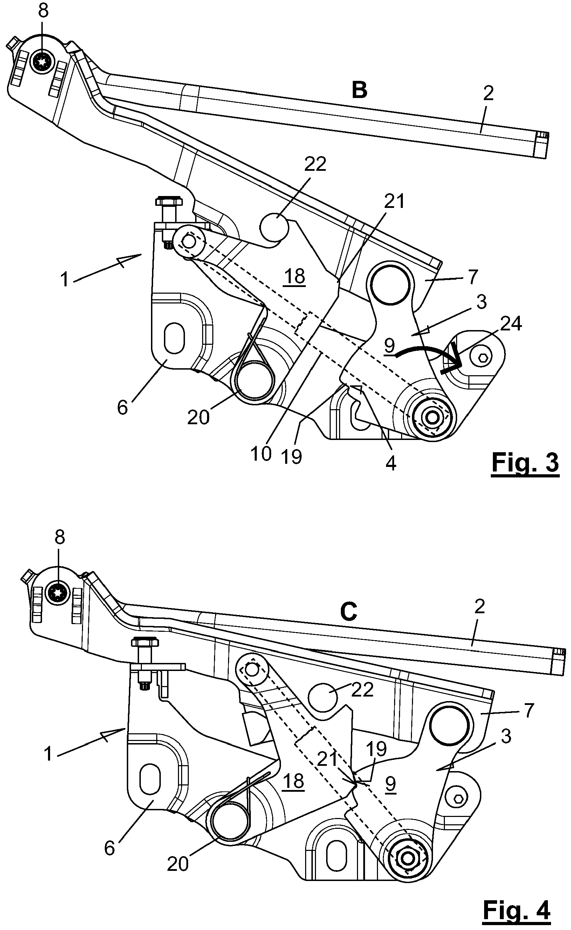

Figures 1 to 4 depict a first variant of the system 1 according to the invention in which the means for displacing 3 in a guided manner the rear part of the hood 2 comprise a fixed part 6, intended for being firmly secured to the chassis of the vehicle by means of screws or the like; a movable part 7 which supports or in which an articulated attachment 8 with the rear part of the hood 2 is integrated; at least one guiding lever 9 which connects and guides the displacement of the movable part 7 with respect to the fixed part 6; and a pyrotechnic actuator 10, depicted with dotted lines, susceptible of applying a pushing action, when it is actuated, which is transmitted to the movable part 7 for displacing the articulated attachment 8 with the hood 2 and by driving the rear part of the hood 2 from the initial closed position A depicted in Figure 1 to the impact position B depicted in Figure 3.

For that purpose, the system 1 comprises a pushing lever 18, rotational in relation to the fixed part 6, in which the end of the piston for pushing the pyrotechnic actuator 10 is connected. When it is detected that someone has been hit, a signal for activating the pyrotechnic actuator 10 is generated, causing its triggering and the extension of its associated piston, forcing the pushing lever 18 to rotate in the direction indicated by arrow 23 of Figure 2.

As can be observed in Figures 1 to 4, the movable part 7 is provided with a projection 22, like a pin, on which a pushing arm of the pushing lever 18 (see Figure 2) is supported so that the rotational movement of the latter is transmitted to the movable part 7, the articulated attachment 8 which connects the chassis of the vehicle with the hood consequently being displaced, until reaching the impact position B depicted in Figure 3.

The path followed by the movable part 7 is guided by a pair of guiding levers 9 (only one of which is seen in Figures 1 to 4) and the impact position B is determined by the shape of said guiding levers 9 and by a stop or end of travel element of the movable part 7, supported and integral with the fixed part 6.

The system 1 comprises, in addition to the means for displacing 3 in a guided manner the rear part of the hood 2 in the event of someone being hit, suitable means so that, after the triggering of the pyrotechnic actuator 10, the hood 2 can be displaced manually downwards until reaching a provisional retaining position in which it is firmly secured automatically to the chassis of the vehicle.

To that end, the system 1 according to the invention comprises mechanical means for the automatic and firm securing 4 of the hood 2 to the chassis of the vehicle when the hood 2 reaches said provisional retaining position C. In the two variants depicted, said mechanical means are assembled on the fixed part 6 of the means for displacing 3 in a guided manner the rear part of the hood 2, forming a self-supporting assembly which can be fixed at the same time on the chassis of the vehicle. In other contemplated variants, the mechanical means for the automatic and firm securing 4 of the hood 2 can be independent of the means for displacing 3 in a guided manner the rear part of the hood 2, and be located in another part of the vehicle though always in proximity to the hood. In this alternative variant, the hood 2 must be provided with suitable means for cooperating with the mechanical means for its automatic and firm securing in the event of the hood 2 being displaced from its impact position to its provisional retaining position.

Going back to the variant depicted in Figures 1 to 4, the mechanical means for the automatic and firm securing 4 of the hood 2 are formed by a recess 19 provided on an edge of the guiding lever 9; a spring 20 biasing the pushing lever 18 in the direction opposite to the pushing direction; and a projection 21 provided in the pushing lever 18, all so that by starting from the situation depicted in Figure 3, in which the hood 2 adopts the impact position B, when the latter is displaced in the direction opposite to the actuation direction of the pyrotechnic actuator 10 it forces the guiding lever 9 to rotate in the direction indicated by arrow 24 of Figure 3 until adopting a position in which the projection 21 of the pushing lever 18, by the effect of the spring 20, fits automatically, and like a catch, in the recess 19 of the guiding lever 9 as is shown in Figure 4. When this occurs, the hood 2 adopts its provisional retaining position C, in which movement is impeded.

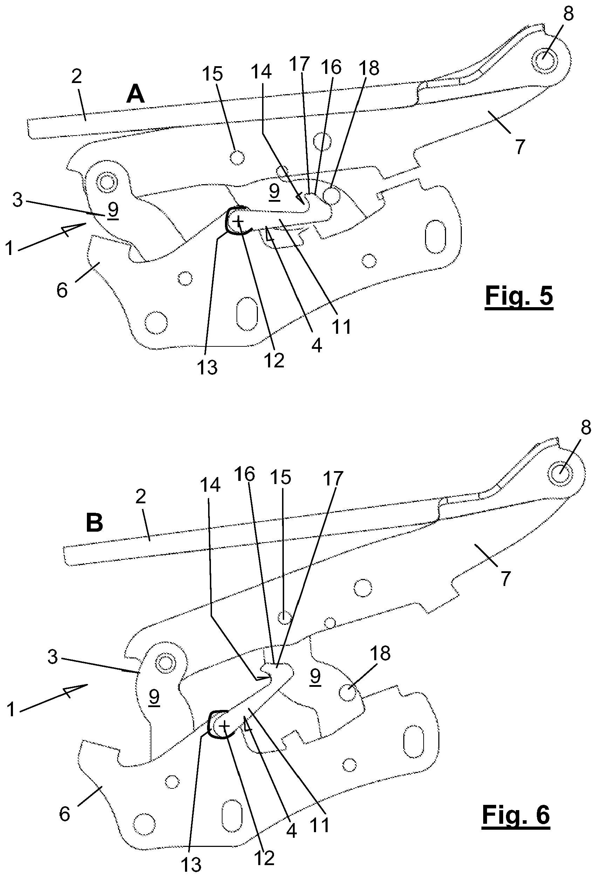

Figures 5 to 8 depict a second variant of the system 1 according to the invention and the same reference numbers have been used to designate components that are equivalent to system 1 of the first variant.

Unlike the variant of Figures 1 to 4, in this second variant the piston of the pyrotechnic actuator (not depicted) is connected directly with the movable part 7. In the event that the pyrotechnic actuator is triggered, the extension of the piston causes the displacement of said movable part 7 towards the impact position B. Similarly to the first variant, the displacement of the movable part 7, which supports the articulated attachment 8 with the hood 2, is guided by two guiding levers 9 to assure the elevation of the hood 2 at the same time as a displacement in the retreat direction, i.e., towards the windshield of the vehicle. The position adopted by the components of the means for displacing 3 in a guided manner the rear part of the hood 2 in its initial closed position A and in its impact position B has been depicted in Figures 5 and 6, respectively.

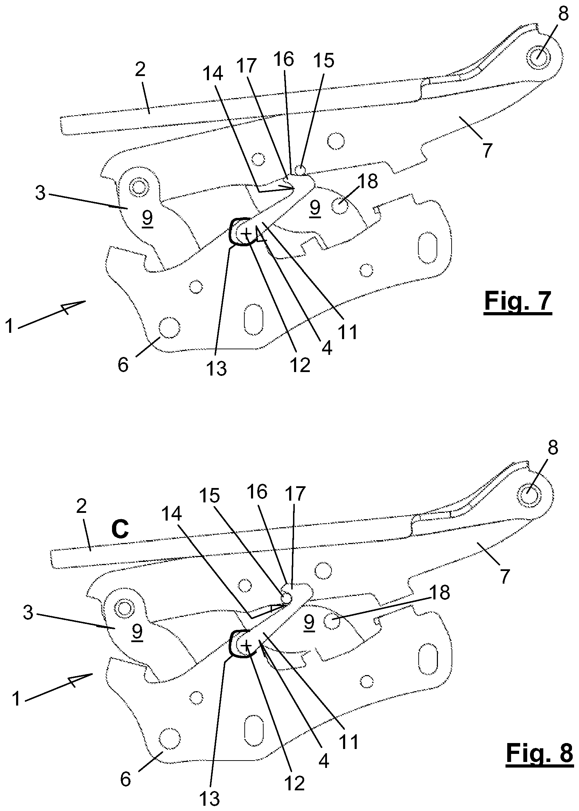

The mechanical means for the automatic and firm securing 4 of the hood 2 are formed by a rotating bar 11 which rotates about a shaft 12 integral with the fixed part 6 and biased by elastic means 13 in a retaining direction. This rotating bar is provided with a hook 14 and the movable part 7 with a protuberance 15 intended for sliding on the outer face 16 of the retaining arm 17 of the hook 14 and for displacing it by compressing the corresponding elastic means when the rear part of the hood 2 is displaced from its impact position B towards the provisional retaining position C, all this as depicted in Figure 7.

Should the movement of the hood 2 continue, and consequently should the rotation of the guiding levers 9 continue, said protuberance 15 exceeds the distal end or tip of the retaining arm 17 of the hook 14 and the latter is actuated by the elastic means 13 towards the protuberance 15, which is automatically seized by the hook 14, the displacement of the second movable part 7, and hence of the rear part of the hood 2, being impeded.

For the purpose of retaining the rotating bar 11 in a position which does not present an obstacle to the displacement of the hood 2 from its initial closed position A, depicted in Figure 5, to its impact position B, depicted in Figure 6, in the example depicted a guiding lever 9 is provided with a projection 18 which, like a stop, impedes the displacement of the rotating bar 11 in the retaining direction and while the pyrotechnic actuator is not triggered.

It must be noted that the location of the protuberance 15, the dimensions or arrangement of the hook 14 and the elastic energy accumulated by the elastic means 13 have been selected such that once the rotating bar 11 is released when the displacement of the guiding lever 9 occurs as a consequence of the triggering of the pyrotechnic actuator, the hook 14 and the protuberance 15, both moving, do not spatially coincide to assure that the hood reaches its retaining position B without any obstacles.

## Claims

1. A safety system (1) applicable to automobiles for the protection of a pedestrian in the event of being hit, the system being of the type comprising means for displacing (3) in a guided manner the rear part of the hood (2) in the event of someone being hit from its initial closed position (A), and in a direction with an upward component, until reaching an impact position (B) for the purpose of damping the impact of the pedestrian against the components located under the hood, the system being **characterized in that** the means for displacing the rear part of the hood are suitable so that, once the impact position is reached, a provisional retaining and driving position (C), in which the rear part of the hood is disposed at a level above its initial closed position, can be reached by displacing the hood from said impact position in a direction with a downward component and towards the closed position (A), and **in that** the system further comprises mechanical means for the automatic and firm securing (4) of the hood to the chassis of the automobile when the hood reaches said provisional retaining and driving position.

2. The system (1) according to claim 1, **characterized in that** the provisional retaining and driving position (C) is such that the user can visually see that the hood (2) does not adopt its initial closed position.

3. The system (1) according to any one of the preceding claims, **characterized in that** the means for displacing (3) in a guided manner the rear part of the hood (2) and the mechanical means for the automatic and firm securing (4) of the hood form a self-supporting assembly.

4. The system (1) according to any one of the preceding claims, **characterized in that**
- the means for displacing (3) in a guided manner the rear part of the hood comprise a fixed part (6), intended for being firmly secured to the chassis of the vehicle; a movable part (7) which supports or in which an articulated attachment (8) with the rear part of the hood (2) is integrated; at least one guiding lever (9) which connects and guides the displacement of the movable part with respect to the fixed part; and a pyrotechnic actuator (10) susceptible of applying a pushing action when it is actuated, which is transmitted to the movable part for displacing the articulated attachment with the hood and by driving the rear part of the hood from its initial closed position (A) to the impact position (B), and **in that**
- the mechanical means for the automatic and firm securing (4) of the hood comprise a rotating bar (11) which rotates about a shaft (12) integral with the fixed part and biased by elastic means (13) in a retaining direction, the rotating bar being provided with a hook (14) and the second movable part with a protuberance (15) intended for sliding on the outer face (16) of the retaining arm (17) of the hook and for displacing it by compressing the corresponding elastic means when the rear part of the hood is displaced from its impact position (B) towards the provisional retaining and driving position (C), and for being seized by the hook once said protuberance exceeds the distal end or tip of the retaining arm of the hook and the latter is actuated by said elastic means towards the protuberance, the displacement of the second movable part, and hence of the rear part of the hood, being impeded.

5. The system (1) according to the preceding claim, **characterized in that** the guiding lever (9) or the movable part (7) of the means for displacing (3) in a guided manner the rear part of the hood (2) comprise a projection (18) impeding the displacement of the rotating bar (11) in the retaining direction while the pyrotechnic actuator (10) is not actuated.

6. The system (1) according to any one of claims 1 to 3, **characterized in that**
- the means for displacing (3) in a guided manner the rear part of the hood comprise a fixed part (6), intended for being firmly secured to the chassis of the vehicle; a movable part (7) which supports or in which an articulated attachment (8) with the rear part of the hood (2) is integrated; at least one guiding lever (9) which connects and guides the displacement of the movable part with respect to the fixed part; a pushing lever (18), rotational in relation to the fixed part; and a pyrotechnic actuator (10) connected with said pushing lever, susceptible of applying on the latter a pushing action when it is actuated, which is transmitted to the movable part for displacing the articulated attachment with the hood and by driving the rear part of the hood from its initial closed position to the impact position, and **in that**
- the mechanical means for the automatic and firm securing (4) of the hood (2) comprise a recess (19) provided on an edge of the guiding lever; a spring (20) biasing the pushing lever in the direction opposite to the pushing direction; and a projection (21) provided in the pushing lever, all so that once the hood reaches the impact position (B) and when it is displaced towards the provisional retaining and driving position (C), it forces the guiding lever to adopt a position in which the projection of the pushing lever fits by snapping, like a catch, in the recess of the guiding lever, blocking its movement and, accordingly, firmly securing the hood.

## Patentansprüche

1. Sicherheitssystem (1), das auf Automobile zum Schutz eines Fußgängers im Fall des Zusammenstoßes mit diesem anwendbar ist, wobei das System der Art ist, welche Mittel zum Verschieben (3), in einer geführten Weise, des Hinterteils der Motorhaube (2) im Fall des Zusammenstoßes mit jemandem, von dessen anfänglichen geschlossenen Stellung (A) und in eine Richtung mit einer Aufwärtskomponente, bis eine Aufprallstellung (B) erreicht wird, zum Zwecke des Dämpfens des Aufpralls des Fußgängers gegen die sich unter der Motorhaube befindenden Bauteile, umfasst, wobei das System **dadurch gekennzeichnet ist, dass** die Mittel zum Verschieben des Hinterteils der Motorhaube geeignet sind, so dass, sobald die Aufprallstellung erreicht wird, eine vorläufige Rückhalte- und Fahrstellung (C), in welcher der Hinterteil der Motorhaube auf einer Ebene über dessen anfänglichen geschlossenen Stellung angeordnet wird, erreicht werden kann, indem die Motorhaube von der genannten Aufprallstellung und in eine Richtung mit einer Abwärtskomponente und zur geschlossenen Stellung (A) hin verschoben wird, und dass das System zusätzlich mechanische Mittel für die automatische und stabile Befestigung (4) der Motorhaube am Fahrgestell des Automobils, wenn die Motorhaube die genannte vorläufige Rückhalte- und Fahrstellung erreicht, umfasst.

2. System (1) nach Anspruch 1, **dadurch gekennzeichnet, dass** die vorläufige Rückhalte- und Fahrstellung (C) derart ist, dass der Benutzer optisch sehen kann, dass die Motorhaube (2) nicht deren anfängliche geschlossene Stellung einnimmt.

3. System (1) nach einem der vorhergehenden Ansprüche, **dadurch gekennzeichnet, dass** die Mittel zum Verschieben (3), in einer geführten Weise, des Hinterteils der Motorhaube (2) und die mechanischen Mittel für die automatische und stabile Befestigung (4) der Motorhaube eine selbsttragende Baugruppe bilden.

4. System (1) nach einem der vorhergehenden Ansprüche, **dadurch gekennzeichnet, dass**
- die Mittel zum Verschieben (3), in einer geführten Weise, des Hinterteils der Motorhaube einen fixierten Teil (6) umfassen, welcher dafür bestimmt ist, am Fahrgestell des Fahrzeugs stabil befestigt zu werden; einen beweglichen Teil (7), welcher eine Gelenkkupplung (8) stützt oder in welchem eine Gelenkkupplung (8) mit dem Hinterteil der Motorhaube (2) integriert ist; mindestens einen Führungshebel (9), welcher die Verschiebung des beweglichen Teils in Bezug auf den fixierten Teil verbindet und führt; und ein pyrotechnisches Stellglied (10), welches in der Lage ist, wenn es betätigt wird, eine Druckwirkung aufzubringen, welche dem beweglichen Teil übertragen wird, um die Gelenkkupplung mit der Motorhaube zu verschieben und indem der Hinterteil der Motorhaube von dessen anfänglichen geschlossenen Stellung (A) zur Aufprallstellung (B) gefahren wird, und dass
- die mechanischen Mittel für die automatische und stabile Befestigung (4) der Motorhaube einen rotierenden Stab (11) umfassen, welcher um eine Welle (12) rotiert, welche einstückig mit dem fixierten Teil gebildet ist und von elastischen Mitteln (13) in eine Rückhalterichtung gelenkt wird, wobei der rotierende Stab mit einem Haken (14) und der zweite bewegliche Teil mit einem Vorsprung (15) versehen sind, welcher dafür bestimmt ist, auf der Außenfläche (16) des Rückhaltearms (17) des Hakens zu gleiten und demselben mittels des Zusammendrückens der entsprechenden elastischen Mittels zu verschieben, wenn der Hinterteil der Motorhaube von dessen Aufprallstellung (B) zur vorläufigen Rückhalte- und Fahrstellung (C) hin verschoben wird, und vom Haken gegriffen zu werden, sobald der genannte Vorsprung über das distale Ende oder der Spitze des Rückhaltearms des Hakens hinausgeht und Letzterer von den genannten elastischen Mitteln zum Vorsprung hin betätigt wird, wobei die Verschiebung des zweiten beweglichen Teils, und daher des Hinterteils der Motorhaube, verhindert wird.

5. System (1) nach dem vorhergehenden Anspruch, **dadurch gekennzeichnet, dass** der Führungshebel (9) oder der bewegliche Teil (7) der Mittel zum Verschieben (3), in einer geführten Weise, des Hinterteils der Motorhaube (2) eine Erhebung (18) umfassen, welche die Verschiebung des rotierenden Stabs (11) in die Rückhalterichtung verhindert, während das pyrotechnische Stellglied (10) nicht betätigt wird.

6. System (1) nach einem der Ansprüche 1 bis 3, **dadurch gekennzeichnet, dass**
- die Mittel zum Verschieben (3), in einer geführten Weise, des Hinterteils der Motorhaube einen fixierten Teil (6) umfassen, welcher dafür bestimmt ist, am Fahrgestell des Fahrzeugs stabil befestigt zu werden; einen beweglichen Teil (7), welcher eine Gelenkkupplung (8) stützt oder in welchem eine Gelenkkupplung (8) mit dem Hinterteil der Motorhaube (2) integriert ist; mindestens einen Führungshebel (9), welcher die Verschiebung des beweglichen Teils in Bezug auf den fixierten Teil verbindet und führt; einen Druckhebel (18), welche rotierend relativ zum fixierten Teil ist; und ein pyrotechnisches Stellglied (10), welches mit dem genannten Druckhebel verbunden ist und in der Lage ist, wenn es betätigt wird, eine Druckwirkung auf dem Letzteren aufzubringen, welche dem beweglichen Teil übertragen wird, um die Gelenkkupplung mit der Motorhaube zu verschieben und indem der Hinterteil der Motorhaube von dessen anfänglichen geschlossenen Stellung zur Aufprallstellung gefahren wird, und dass
- die mechanischen Mittel für die automatische und stabile Befestigung (4) der Motorhaube (2) eine Ausnehmung (19), welche auf einem Rand des Führungshebels bereitgestellt wird; eine Feder (20), welche den Druckhebel in die der Druckrichtung entgegengesetzten Richtung lenkt; und eine Erhebung (21), welche im Druckhebel bereitgestellt wird, umfassen, all dies derart dass, sobald die Motorhaube die Aufprallstellung (B) erreicht und wenn sie zur vorläufigen Rückhalte- und Fahrstellung (C) hin verschoben wird, dem Führungshebel dazu zwingt eine Stellung einzunehmen, in welcher die Erhebung des Druckhebels durch Einschnappen, wie eine Klinke, in die Ausnehmung des Führungshebels passt, so dass dessen Bewegung blockiert wird und dementsprechend die Motorhaube stabil befestigt wird.

## Revendications

1. Système de sécurité (1) applicable aux automobiles pour la protection d'un piéton en cas d'être heurté, le système étant du type comprenant des moyens pour déplacer (3) d'une manière guidée la partie arrière du capot (2) dans le cas où quelqu'un serait heurté depuis une position fermée initiale (A), et dans une direction ayant un composant ascendant, jusqu'à atteindre une position d'impact (B) afin d'amortir l'impact du piéton contre les composants situés sous le capot, le système étant **caractérisé en ce que** les moyens pour déplacer la partie arrière du capot sont appropriés de manière que, une fois que la position d'impact est atteinte, une position provisoire de rétention et de conduite (C), dans laquelle la partie arrière du capot est disposée à un niveau au-dessus de sa position initiale fermée, elle peut être atteinte en déplaçant le capot de ladite position d'impact dans une direction ayant un composant descendant et vers la position fermée (A), et **en ce que** le système comprend en outre des moyens mécaniques pour la fixation automatique et solide (4) du capot au châssis de l'automobile lorsque le capot atteint ladite position provisoire de rétention et de conduite.

2. Système (1) selon la revendication 1, **caractérisé en ce que** la position provisoire de rétention et de conduite (C) est telle que l'utilisateur peut observer visuellement que le capot (2) n'adopte pas sa position initiale fermée.

3. Système (1) selon l'une quelconque des revendications précédentes, **caractérisé en ce que** les moyens pour déplacer d'une manière guidée la partie arrière du capot (2) et les moyens mécaniques pour la fixation automatique et solide (4) du capot forment un ensemble autoportant.

4. Système (1) selon l'une quelconque des revendications précédentes, **caractérisé en ce que**
- les moyens pour déplacer (3) d'une manière guidée la partie arrière du capot comprend une partie fixe (3) destinée à être fixer solidement au châssis du véhicule ; une partie mobile (7) qui supporte ou dans laquelle est intégrée une fixation articulée (8) avec la partie arrière du capot (2) ; au moins un levier de guidage (9) qui relie et guide le déplacement de la partie mobile par rapport à la partie fixe; et un actionneur pyrotechnique (10) susceptible d'appliquer une action de poussée lorsqu'il est actionné, qui est transmise à la partie mobile pour déplacer la fixation articulée avec le capot et en conduisant la partie arrière du capot de sa position initiale fermée (A) à la position d'impact (B), et **en ce que**
- les moyens mécaniques pour la fixation automatique et solide (4) du capot comprennent une barre rotative (11) qui tourne autour d'une arbre (12) solidaire de la partie fixe et sollicitée par des moyens élastiques (13) dans une position de rétention, la barre rotative étant pourvue d'un crochet (14) et la seconde partie mobile avec une protubérance (15) destinée à coulisser sur la face extérieure (16) du bras de rétention (17) du crochet et pour le déplacer en comprimant les moyens élastiques correspondants lorsque la partie arrière du capot est déplacée de sa position d'impact (B) vers la position provisoire de rétention et de conduite (C), et pour être saisie par le crochet une fois que la protubérance dépasse l'extrémité ou pointe distale du bras de rétention du capot et ce dernier est actionné par lesdits moyens élastiques vers la protubérance, le déplacement de la seconde partie mobile, et de la sorte de la partie arrière du capot, étant empêché.

5. Système (1) selon la revendication précédente, **caractérisé en ce que** le levier de guidage (9) ou la partie mobile (7) des moyens pour déplacer (3) d'une manière guidée la partie arrière du capot (2) comprennent une saillie (18) empêchant le déplacement de la barre rotative (11) dans la direction de rétention pendant que l'actionneur pyrotechnique (10) n'est pas actionné.

6. Système (1) selon l'une quelconque des revendications 1 à 3, **caractérisé en ce que**
- les moyens pour déplacer (3) d'une manière guidée la partie arrière du capot comprennent une partie fixe (6), destinée à être fixée solidement au châssis du véhicule ; une partie mobile (7) qui supporte ou dans laquelle est intégrée une fixation articulée (8) avec la partie arrière du capot (2) ; au moins un levier de guidage (9) qui relie et guide le déplacement de la partie mobile par rapport à la partie fixe ; un levier de poussée (18) rotatif par rapport à la partie fixe; et un actionneur pyrotechnique (10) relié audit levier de poussée, susceptible d'appliquer sur ce dernier une action de poussée lorsqu'il est actionné, qui est transmise à la partie mobile pour déplacer la fixation articulée avec le capot et en conduisant la partie arrière du capot de sa position initiale fermée à la position d'impact, et **en ce que**
- les moyens mécaniques pour la fixation automatique et solide (4) du capot (2) comprennent un évidement (19) prévu sur un bord du levier de guidage ; un ressort (20) sollicitant le levier de poussée dans la direction opposée à la direction de poussée ; et une saillie (21) prévue dans le levier de poussée, de manière qu'une fois que le capot atteint la position d'impact (B) et lorsqu'il est déplacé vers la position provisoire de rétention et de conduite (C), il force le levier de guidage à adopter une position dans laquelle la saillie du levier de poussée s'ajuste par encliquetage, comme un loquet, dans l'évidement du levier de guidage, bloquant son mouvement et, par conséquent, fixant solidement le capot.
